# EUROPÄISCHE PATENTSCHRIFT

(11) **EP 4 466 157 B1**
(45) Veröffentlichungstag und Bekanntmachung des Hinweises auf die Patenterteilung: **18.02.2026**
(21) Anmeldenummer: 22843815.6
(22) Anmeldetag: 23.12.2022
(51) Int. Cl.: B60L 58/20, B60L 15/20, B60L 50/64

(54) **ENERGIESPEICHERSYSTEM**
ENERGY STORAGE SYSTEM
SYSTÈME DE STOCKAGE D'ÉNERGIE

(30) Priorität: 20.01.2022 DE 102022200640
(43) Veröffentlichungstag der Anmeldung: 27.11.2024
(73) Patentinhaber: Siemens Energy Global GmbH & Co. KG, 81739 München (DE)
(72) Erfinder: JUNGLEWITZ, Andreas, 21077 Hamburg (DE); WIESE, Matthias, 22393 Hamburg (DE)
(86) Internationale Anmeldenummer: PCT/EP2022/087695
(87) Internationale Veröffentlichungsnummer: WO 2023/138881

(56) Entgegenhaltungen:
- WO-A1-2017/153317
- US-A- 5 905 360
- US-A- 5 998 960
- US-A1- 2002 145 404

## Beschreibung

Die Erfindung betrifft ein Energiespeichersystem für ein Fahrzeug, ein Fahrzeug mit einem Energiespeichersystem und ein Verfahren zum Betrieb eines Fahrzeugs mit Energiespeichersystem. Dabei bilden mehrere Zellen eine Batterie und mehrere Batterien, deren C-Raten zumindest zum Teil unterschiedlich sind, ein Modul.

Aufgabe der Erfindung ist es, ein verbessertes Energiespeichersystem für Fahrzeuge bereitzustellen, welches möglichst einfach und kostengünstig herzustellen ist. Eine weitere Aufgabe der Erfindung ist es, ein Fahrzeug mit einem solchen Energieversorgungssystem bereitzustellen. Schließlich ist es eine Aufgabe der Erfindung ein entsprechendes Verfahren zum Betrieb eines Fahrzeugs mit Energiespeichersystem anzugeben.

US 2002/145404 A1 offenbart eine Vorrichtung, ein Gerät und ein Verfahren zur Speicherung elektrischer Energie und zur Bereitstellung dieser Energie für einen elektrischen Verbraucher mit unterschiedlichen Leistungsraten. Insbesondere betrifft dieses Dokument eine Vorrichtung, ein Gerät und ein Verfahren unter Verwendung einer Hybridbatterie zur Bereitstellung variabler Leistungsraten für einen elektrischen Verbraucher, wie beispielsweise einen Elektromotor oder einen Verbrennungsmotor zum Antrieb eines Fahrzeugs.

Es gibt zwei grundsätzlich unterschiedliche Batterietypen: Batterien mit vergleichsweise kleinen C-Raten laden mit vergleichsweise kleinem Strom über eine vergleichsweise längere Zeit. Batterien mit vergleichsweise hohen C-Raten können mit vergleichsweise hohem Strom in vergleichsweise kurzer Zeit geladen werden. Batterien mit vergleichsweise kleiner C-Rate haben eine höhere Kapazität, sind preiswerter und wären für Kunden vorteilhaft. Die Auswahl der C-Rate erfolgt nach dem Einsatzprofil und der kürzesten zur Verfügung stehenden Ladezeit und dem sich anschließenden Betriebszyklus. Setzt sich das Fahrprofil aus einem langen und anschließend mehreren kurzen Teilstücken zusammen, bestimmt das lange Teilstück die Gesamtkapazität der Batterie (Größe) und der kurze Aufenthalt bei den kleinen Teilstücken die Höhe der C-Rate. Bei Verwendung nur einer C-Rate müsste die gesamte notwendige Kapazität mit Batterien der hohen C-Rate entsprechend dem kurzen Teilstück installiert werden.

Die Erfindung löst die auf ein Energiespeichersystem gerichtete Aufgabe, indem sie vorsieht, dass bei einem derartigen Energiespeichersystem für ein Fahrzeug, welches entlang einer Route mit mehreren Abschnitten unterschiedlicher Länge betrieben und an Haltepunkten zwischen zwei aufeinanderfolgenden Abschnitten aufgeladen wird, umfassend eine erste Batterie mit einer ersten C-Rate und eine zweite Batterie mit einer zweiten C-Rate, wobei die zweite C-Rate höher als die erste C-Rate ist, das Energiespeichersystem ein Steuersystem umfasst, das so konfiguriert ist, dass die erste und die zweite Batterie an den Haltepunkten geladen werden, dass die erste und die zweite Batterie auf überdurchschnittlich langen Abschnitten der Route zumindest teilweise entladen werden und dass auf zumindest einigen der übrigen Abschnitte die erste Batterie durch die zweite Batterie geladen wird.

Die Erfindung löst das Problem also dadurch, dass das Energiespeichersystem eine Kombination aus Batterien mit hoher und kleiner C-Rate umfasst. Dabei werden beide Batteriearten auf einem langen Teilstück entladen. Beim kurzzeitigen Aufladen werden die Batterien mit hoher C-Rate vollständig geladen, während die anderen nur eine kleine Teilladung erhalten. Während des Betriebs auf einem ersten kleinen Teilstück wird die Energie aus den Batterien mit hoher C-Rate verwendet. Gleichzeitig wird ein Teil der Energie aus den voll aufgeladenen Batterien verwendet, um die Batterien mit kleiner C-Rate auch im Betrieb weiter zu laden. Durch diese Kombination von Batterien und Energiemanagement kann nach Absolvierung mehrerer kurzer Ladevorgänge und kurzer Betriebsteilstücke ein weiteres langes Teilstück absolviert werden, das die Kapazitäten aller Batterien erfordert, ohne eine lange Ladephase für die Batterien mit kleiner C-Rate zu benötigen. Hierbei ist "Länge" bei konstanter Geschwindigkeit ein Synonym für benötigte Energie. Unterschiedliche Energiebedarfe können auch aus unterschiedlichen Geschwindigkeiten, Widerständen (Wind) oder Höhenunterschieden (Berg-, Talfahrt) entstehen bei gleichlangen Abschnitten.

In einer vorteilhaften Ausführungsform der Erfindung ist die erste Energiespeicherkapazität der ersten Batterie zwei- bis neunmal so groß wie die zweite Energiespeicherkapazität der zweiten Batterie. Dieses Verhältnis hängt von den Routenlängen bzw. -geschwindigkeiten (benötigte Energie) und den gewählten C-Raten ab.

In einer weiteren vorteilhaften Ausführungsform der Erfindung sind die erste Batterie und die zweite Batterie so angeordnet, dass die zweite Batterie leichter zugänglich ist als die erste Batterie. Die Erfindung geht hierbei von der Erkenntnis aus, dass die Anzahl der Ladezyklen bei Batterien mit hoher C-Rate im Betrieb deutlich höher ist als bei Batterien mit kleiner C-Rate und somit die Lebenserwartung entsprechend geringer ist, was zu einer früher notwendigen Ersatzbeschaffung führt (höhere OPEX). Bei einer Kombination von zwei sehr unterschiedlichen C-Raten ist entsprechend auch die Lebensdauer unterschiedlich, was für eine unterschiedliche Unterbringung an Bord des Fahrzeuges, beispielsweise eines Schiffes, ausgenutzt werden kann. So können Batterien mit kleiner C-Rate und entsprechend höherer Lebensdauer in schwerer zugänglichen Räumen, z.B. kielnahe Räume, untergebracht werden, während die Batterien mit kürzerer Lebensdauer in leichter zugänglichen Räumen untergebracht werden sollten.

Die auf ein Fahrzeug gerichtete Aufgabe wird gelöst durch ein Fahrzeug mit einem Energiespeichersystem nach der Erfindung.

Die auf ein Verfahren gerichtete Aufgabe wird gelöst durch ein Verfahren zum Betrieb eines Fahrzeugs mit Energiespeichersystem, das Energiespeichersystem umfassend eine erste Batterie mit einer ersten C-Rate und eine zweite Batterie mit einer zweiten C-Rate, wobei die zweite C-Rate höher als die erste C-Rate ist, wobei das Fahrzeug entlang einer Route mit mehreren Abschnitten unterschiedlicher Länge betrieben und das Energiespeichersystem an Haltepunkten zwischen zwei aufeinanderfolgenden Abschnitten aufgeladen wird, wobei die erste und die zweite Batterie an den Haltepunkten geladen werden, die erste und die zweite Batterie auf überdurchschnittlich langen Abschnitten der Route zumindest teilweise entladen werden und dass auf zumindest einem Teil der übrigen Abschnitte die erste Batterie durch die zweite Batterie geladen wird.

Vorteilhafterweise wird die zweite Batterie an den Haltepunkten vollständig geladen.

Batterien mit hoher C-Rate werden für kurzläufige Zyklen und Batterien mit kleiner C-Rate werden für langläufige Zyklen in der Technik eingesetzt. Die Besonderheit der vorliegenden Erfindung liegt im Energiemanagement, das Energie aus den schnell aufladbaren Batterien verwendet, um einen langen Ladezyklus für die Batterien mit kleiner C-Rate zu gewährleisten. Dadurch wird ein Betrieb mit unterschiedlich langen Lade- und Entladezyklen, wie sie beispielsweise bei Schiffsfähren mit mehreren unterschiedlichen Haltepunkten auftreten können, auch mit einem größeren Anteil an Batterien mit kleiner C-Rate ermöglicht. Dies führt zu einer Kostenreduktion in der Batterieausstattung (CAPEX) und zu einem kleineren Batterievolumen/-gewicht, da Batterien mit kleinerer C-Rate eine höhere Kapazität pro/Volumen/Gewicht aufweisen als Batterien mit hoher C-Rate.

Auch die notwendige Kühlkapazität für die Gesamtbatteriekapazität verringert sich, wenn nur ein kleinerer Teil der Batteriekapazität mit hoher C-Rate - und damit höherer Abwärmebetrieben werden muss. Auch die Sicherheitsanforderungen an Batterien mit hoher C-Rate sind typischerweise höher als für diejenigen mit kleiner C-Rate.

Die Erfindung wird beispielhaft anhand der Zeichnungen näher erläutert. Es zeigen schematisch und nicht maßstäblich:
- Figur 1: ein mögliches Beispiel für die Fahrt eines Fährschiffes und
- Figur 2: einen beispielhaften Verlauf des Ladezustandes der ersten und der zweiten Batterie sowie des Gesamtladezustandes über der Zeit.

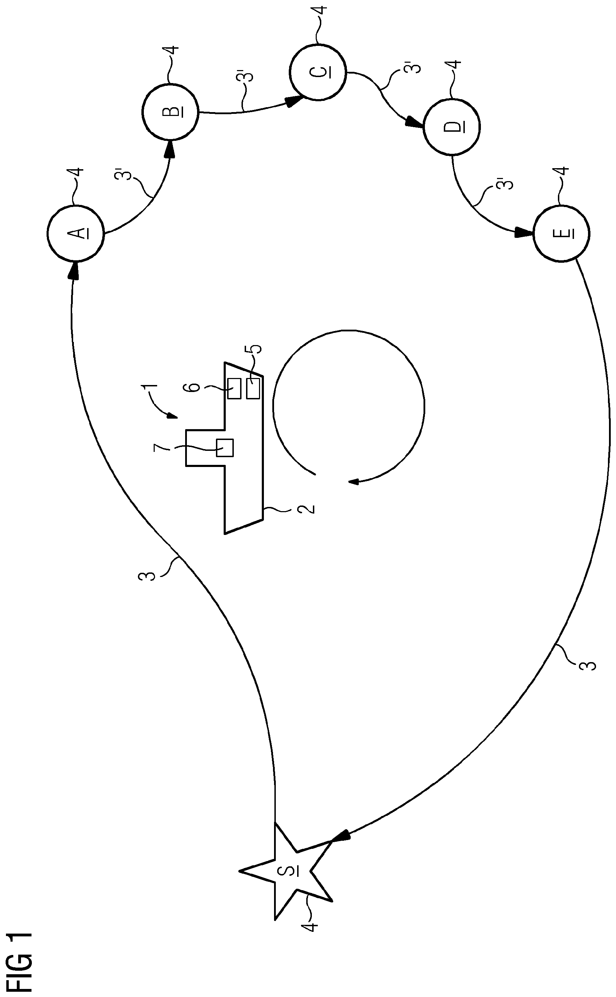

Die Figur 1 zeigt schematisch und beispielhaft die Route eines Fährschiffes 2 mit einem Energiespeichersystem 1 nach der Erfindung. Die Route enthält mehrere Abschnitte 3, 3' unterschiedlicher Länge mit Haltepunkten 4 zwischen zwei aufeinanderfolgenden Abschnitten 3, 3', an denen das Energiespeichersystem 1 aufgeladen werden kann. Das Energiespeichersystem 1 umfasst eine erste Batterie 5 mit einer ersten C-Rate und eine zweite Batterie 6 mit einer zweiten C-Rate, wobei die zweite C-Rate höher als die erste C-Rate ist. Ferner umfasst das Energiespeichersystem 1 ein Steuersystem 7, das so konfiguriert ist, dass die erste Batterie 5 und die zweite Batterie 6 an den Haltepunkten 4 geladen werden, dass die erste Batterie 5 und die zweite Batterie 6 auf überdurchschnittlich langen Abschnitten 3 der Route zumindest teilweise entladen werden und dass auf zumindest einigen der übrigen Abschnitte 3' die erste Batterie 5 durch die zweite Batterie 6 geladen wird.

Im Beispiel der Figur 1 werden die erste Batterie 5 und die zweite Batterie 6 am Startpunkt S vollständig aufgeladen. Auf dem ersten langen Teilstück 3 zwischen dem Startpunkt S und dem Haltepunkt A werden die erste Batterie 5 und die zweite Batterie 6 vollständig entladen. Beim kurzzeitigen Aufladen am Haltepunkt A wird die zweite Batterie 6, also die mit hoher C-Rate, vollständig geladen, während die erste Batterie 5 am Ende des Ladevorgangs nur eine kleine Teilladung enthält. Für den Betrieb des Fährschiffs 2 auf dem ersten kleinen Abschnitt 3' zwischen Haltepunkt A und Haltepunkt B wird die Energie aus der zweiten Batterie 6, also der Batterie mit hoher C-Rate, verwendet. Gleichzeitig wird ein Teil der Energie aus dieser bei Abfahrt vom Haltepunkt A voll aufgeladenen zweiten Batterie 6 verwendet, um die erste Batterie 5 mit kleiner C-Rate auch im Betrieb der Fähre 2 weiter zu laden. Bei Ankunft am Haltepunkt B ist im Beispiel der Figur 1 die zweite Batterie 6 leer und die erste Batterie 5 auf vergleichsweise niedrigem Niveau, jedoch höher als bei der Abfahrt von Haltepunkt A, teilgeladen. In der Zeit, die die Fähre am Haltepunkt B liegt, werden im Ausführungsbeispiel der Figur 1, wie am Haltepunkt A, beide Batterien 5 und 6 geladen. Die erste Batterie 5 wird ausgehend von einem vergleichsweise niedrigen Niveau weiter geladen; die zweite Batterie 6 wird von Null ausgehend vollständig geladen.

Das beschriebene Vorgehen wiederholt sich auf den nächsten kurzen Abschnitten 3' und an den Haltepunkten 4, so dass bei der Abfahrt am Haltepunkt E sowohl die erste Batterie 5 als auch die zweite Batterie 6 vollständig aufgeladen sind und der lange Abschnitt 3 zwischen Haltepunkt E und Ziel S gefahren werden kann.

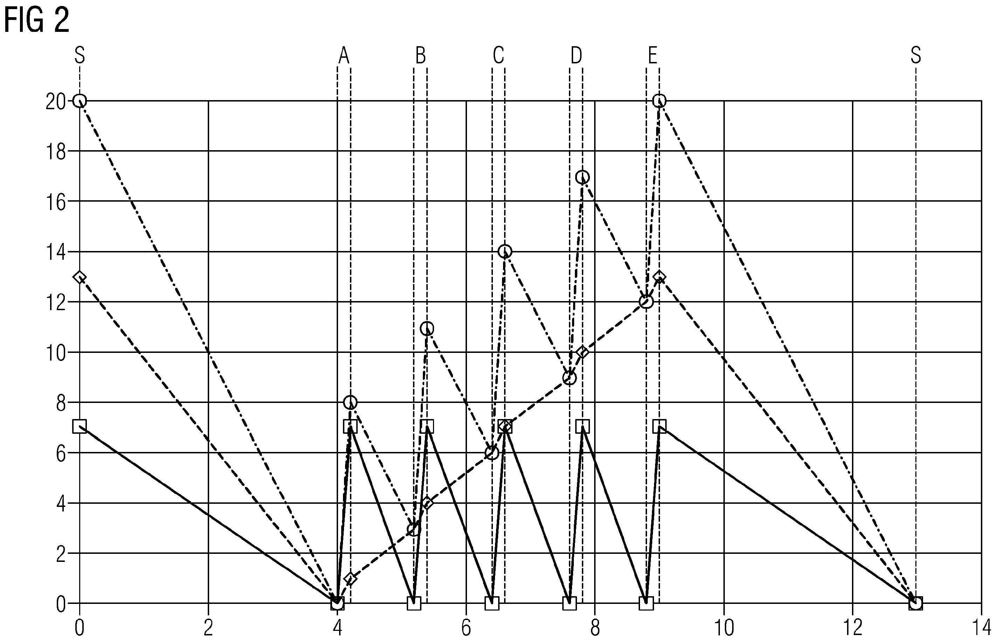

Die Figur 2 zeigt einen beispielhaften Verlauf des Ladezustandes der ersten Batterie 5 (-◆-) und der zweiten Batterie 6 (-■-) sowie den entsprechenden Verlauf des Gesamtladezustandes (-▲-) über der Zeit. Dabei ist leicht erkennbar, wie die erste Batterie 5 sowohl an den Haltepunkten 4 (S, A, B, C, D, E), als auch auf den Kurzstrecken 3' zwischen diesen Haltepunkten 4 geladen wird, wohingegen eine Ladung der zweiten Batterie 6 nur an den Haltepunkten 4 selbst erfolgt. Die nachfolgende Tabelle zeigt entsprechende Lade- und Entladevorgänge der Batterien auf den Abschnitten 3 bzw. 3' und an den Haltepunkten 4 (S, A, B, C, D, E):

| | erste Batterie 5 (kleine C-Rate) | zweite Batterie 6 (große C-Rate) |
|---|---|---|
| S-A, E-S | entladen | entladen |
| A, B, C, D, E, S | laden | laden |
| A-B, B-C, C-D, D-E | **laden** | entladen |

| | | |
|---|---|---|
| benötigte Kapazität gemäß Stand der Technik | 0 | 20 Einheiten |
| benötigte Kapazität | 13 Einheiten | 7 Einheiten |
| gemäß der Erfindung | | |

## Patentansprüche

1. Energiespeichersystem (1) für ein Fahrzeug (2), welches entlang einer Route mit mehreren Abschnitten (3, 3') unterschiedlicher Länge betrieben und an Haltepunkten (4) zwischen zwei aufeinanderfolgenden Abschnitten (3, 3') aufgeladen wird, umfassend eine erste Batterie (5) mit einer ersten C-Rate und eine zweite Batterie (6) mit einer zweiten C-Rate, wobei die zweite C-Rate höher als die erste C-Rate ist, **dadurch gekennzeichnet, dass** das Energiespeichersystem (1) ein Steuersystem (7) umfasst, das so konfiguriert ist, dass die erste und die zweite Batterie (5, 6) an den Haltepunkten (4) geladen werden, dass die erste und die zweite Batterie (5, 6) auf überdurchschnittlich langen Abschnitten (3) der Route zumindest teilweise entladen werden und dass auf zumindest einigen der übrigen Abschnitte (3') die erste Batterie (5) durch die zweite Batterie (6) geladen wird.

2. Energiespeichersystem (1) nach Anspruch 1, wobei die erste Energiespeicherkapazität der ersten Batterie (5) zweibis neunmal so groß ist wie die zweite Energiespeicherkapazität der zweiten Batterie (6).

3. Energiespeichersystem (1) nach einem der vorhergehenden Ansprüche, wobei die erste Batterie (5) und die zweite Batterie (6) so angeordnet sind, dass die zweite Batterie (6) leichter zugänglich ist als die erste Batterie (5).

4. Fahrzeug (2) mit einem Energiespeichersystem (1) nach einem der vorhergehenden Ansprüche.

5. Verfahren zum Betrieb eines Fahrzeugs (2) mit Energiespeichersystem (1), das Energiespeichersystem (1) umfassend eine erste Batterie (5) mit einer ersten C-Rate und eine zweite Batterie (6) mit einer zweiten C-Rate, wobei die zweite C-Rate höher als die erste C-Rate ist, wobei das Fahrzeug (2) entlang einer Route mit mehreren Abschnitten (3, 3') unterschiedlicher Länge betrieben und das Energiespeichersystem (1) an Haltepunkten (4) zwischen zwei aufeinanderfolgenden Abschnitten (3,3') aufgeladen wird, **dadurch gekennzeichnet, dass** die erste und die zweite Batterie (5, 6) an den Haltepunkten (4) geladen werden, die erste und die zweite Batterie (5, 6) auf überdurchschnittlich langen Abschnitten (3) der Route zumindest teilweise entladen werden und dass auf zumindest einem Teil der übrigen Abschnitte (3') die erste Batterie (5) durch die zweite Batterie (6) geladen wird.

6. Verfahren nach Anspruch 5, wobei die zweite Batterie (6) an Haltepunkten (4) vollständig geladen wird.

## Claims

1. An energy storage system (1) for a vehicle (2) operated along a route with multiple sections (3, 3') of different length and charged at stopping points (4) between two successive sections (3, 3'), comprising a first battery (5) with a first C rate and a second battery (6) with a second C rate, wherein the second C rate is higher than the first C rate, **characterized in that** the energy storage system (1) comprises a control system (7) configured so that the first and second batteries (5, 6) are charged at the stopping points (4), that the first and second batteries (5, 6) are at least partially discharged on sections (3) of the route that are longer than average, and that the first battery (5) is charged by the second battery (6) on at least some of the remaining sections (3').

2. The energy storage system (1) according to claim 1, wherein the first energy storage capacity of the first battery (5) is two to nine times the second energy storage capacity of the second battery (6).

3. The energy storage system (1) according to any preceding claim, wherein the first battery (5) and the second battery (6) are arranged so that the second battery (6) is more easily accessible than the first battery (5).

4. A vehicle (2) with an energy storage system (1) according to any preceding claim.

5. A method for operating a vehicle (2) with an energy storage system (1), the energy storage system (1) comprising a first battery (5) with a first C rate and a second battery (6) with a second C rate, wherein the second C rate is higher than the first C rate, the vehicle (2) is operated along a route with multiple sections (3, 3') of different length and the energy storage system (1) is charged at stopping points (4) between two successive sections (3, 3'), **characterized in that** the first and second batteries (5, 6) are charged at the stopping points (4), that the first and second batteries (5, 6) are at least partially discharged on sections (3) of the route that are longer than average, and that the first battery (5) is charged by the second battery (6) on at least a part of the remaining sections (3').

6. The method according to claim 5, wherein the second battery (6) is fully charged at stopping points (4).

## Revendications

1. Système de stockage d'énergie (1) pour un véhicule (2) qui circule sur un itinéraire comportant plusieurs sections (3, 3') de longueurs différentes et qui est chargé à des points d'arrêt (4) entre deux sections consécutives (3, 3'), comprenant une première batterie (5) ayant un premier taux C et une deuxième batterie (6) ayant un deuxième taux C, le deuxième taux C étant supérieur au premier taux C, **caractérisé en ce que** le système de stockage d'énergie (1) comprend un système de commande (7) qui est configuré de telle sorte que les première et deuxième batteries (5, 6) sont chargées aux points d'arrêt (4), que les première et deuxième batteries (5, 6) sont au moins partiellement déchargées sur des sections (3) de l'itinéraire qui sont plus longues que la moyenne, et que la première batterie (5) est chargée par la deuxième batterie (6) sur au moins une partie des sections restantes (3').

2. Système de stockage d'énergie (1) selon la revendication 1, dans lequel la première capacité de stockage d'énergie de la première batterie (5) est deux à neuf fois plus grande que la deuxième capacité de stockage d'énergie de la deuxième batterie (6).

3. Système de stockage d'énergie (1) selon l'une quelconque des revendications précédentes, dans lequel la première batterie (5) et la deuxième batterie (6) sont disposées de telle sorte que la deuxième batterie (6) est plus facilement accessible que la première batterie (5).

4. Véhicule (2) équipé d'un système de stockage d'énergie (1) selon l'une quelconque des revendications précédentes.

5. Procédé de fonctionnement d'un véhicule (2) équipé d'un système de stockage d'énergie (1), le système de stockage d'énergie (1) comprenant une première batterie (5) présentant un premier taux C et une deuxième batterie (6) présentant un deuxième taux C, le deuxième taux C étant supérieur au premier taux C, le véhicule (2) étant exploité sur un itinéraire comportant plusieurs tronçons (3, 3') de longueurs différentes et le système de stockage d'énergie (1) étant chargé à des points d'arrêt (4) entre deux tronçons consécutifs (3, 3'), **caractérisé en ce que** les première et deuxième batteries (5, 6) sont chargées aux points d'arrêt (4), les première et deuxième batteries (5, 6) sont au moins partiellement déchargées sur des tronçons (3) du trajet plus longs que la moyenne, et **en ce que** la première batterie (5) est chargée par la deuxième batterie (6) sur au moins certains des tronçons restants (3').

6. Procédé selon la revendication 5, dans lequel la deuxième batterie (6) est complètement chargée aux points d'arrêt (4).
